# EUROPÄISCHE PATENTANMELDUNG

(11) **EP 1 413 564 A1**
(43) Veröffentlichungstag der Anmeldung: **28.04.2004**
(21) Anmeldenummer: 03019656.2
(22) Anmeldetag: 06.09.2003
(51) Int. Cl.: C04B 35/80, C04B 35/573, F16D 69/02, F16D 65/00, B28B 7/16

(54) **C/SiC-Verbundkörper und Verfahren zum Einbringen von Bohrungen in derselben**

(30) Priorität: 23.10.2002 DE 10249283
(71) Anmelder: DaimlerChrysler AG, 70567 Stuttgart (DE)
(72) Erfinder: Hirsch, Eberhard, 75433 Maulbronn (DE); Thiemann, Karl-Heinz, 71404 Korb (DE)

(57) **Zusammenfassung**

Die Erfindung betrifft ein Verfahren zum Einbringen von Bohrungen (8) in einen C/SiC-Verbundkörper und umfasst folgende Verfahrensschritte:
- Befüllen eines Formwerkzeuges (14) mit einer Kohlenstofffasern (4) enthaltenden Rohmasse (2)
- Formgebung der Rohmasse (2) zu einem CFK-Körper,
- Karbonisieren des CFK-Körpers zu einer C/C-Preform und
- Reaktionsinfiltration der C/C-Preform zu dem C/SiC-Verbundkörper.

Erfindungsgemäß wird während und/oder nach dem Befüllen des Formwerkzeuges (14) mit der Rohmasse (2) eine Ausnehmung in Form einer Bohrung (8) in die Rohmasse (8) eingebracht.

## Beschreibung

Die Erfindung betrifft ein Verfahren zum Einbringen von Bohrungen in einen C/SiC-Verbundkörper nach Anspruch 1 und einen C/SiC-Verbundkörper nach Anspruch 7.

Faserverstärkte Keramiken, insbesondere kohlenstofffaserverstärkte Siliziumkarbid-Keramiken (C/SiC) weisen eine hohe Oxidationsbeständigkeit und eine hohe Verschleißbeständigkeit auf. Problematisch ist jedoch oftmals, wie bei nahezu allen Keramiken, die Verbindung derartiger Materialien mit anderen Bauteilkomponenten, da durch herkömmliche Konstruktionen Kerbspannungen in dem Keramikmaterial induziert werden können. Besonders belastete Bereiche sind beispielsweise Nuten oder Bohrungen.

Sogenanntes keramikgerechtes Konstruieren, beispielsweise das Darstellen von wellenförmigen Konturen anstatt winkligen Konturen, verhindert weitgehend das Einbringen von Kerbspannungen in die Keramik. Bei sicherheitsrelevanten Bauteilen, wie Bremsscheiben besteht jedoch stets die Bemühung, die Festigkeit insbesondere in hochbelasteten Bereichen weiter zu optimieren.

Die Aufgabe der Erfindung besteht demnach darin, die Festigkeit von C/SiC-Materialien im Bereich von Bohrungen zu verbessern.

Das erfindungsgemäße Verfahren nach Anspruch 1 beruht auf einem Verfahren zur Herstellung von C/SiC-Bauteilen. Hierzu wird eine Rohmasse, die Kohlenstofffasern aufweist, in ein Formwerkzeug, in der Regel ein Presswerkzeug, gefüllt, es wird als Vorprodukt ein kohlenstofffaserverstärkter Kunststoff-Körper (CFK-Körper) geformt, der CFK-Körper wird zu einer kohlenstofffaserverstärkten Kohlenstoff-Preform (C/C-Preform) karbonisiert und anschließend durch eine Reaktionsinfiltration mit Silizium zu einem C/SiC-Verbundkörper umgewandelt.

Die Erfindung zeichnet sich dadurch aus, dass während oder nach dem Befüllen der Rohmasse Bohrungen in die Rohmasse und somit in den resultierenden CFK-Körper eingebracht werden. Unter Bohrungen werden hierbei Ausnehmungen verstanden, die üblicherweise durch Bohren oder Fräsen erzeugt werden. Hierzu gehören neben Bohrungen im eigentlichen Sinne, Langlöcher oder Nuten, die gegebenenfalls der Länge nach offen sind.

Ein Vorteil der Erfindung beseht darin, dass sich Faserbündel bereits während der Formgebung um die Bohrungen herum ausrichten und somit eine zusätzliche Verstärkung darstellen. Die Faserbündel werden nicht, wie bei einer nachträglichen mechanischen Einbringen der Bohrungen beschädigt oder zerbrochen, sondern bleiben erhalten und sind für ihre Wirkungsweise besonders günstig ausgerichtet.

In vorteilhafter Weise wird diese Wirkung durch das Einbringen von bohrungsformenden Stiften erzielt. Die Stifte weisen dabei einen ähnlichen Querschnitt auf wie die zu formende Bohrung. Die Stifte weisen in üblicher Weise eine glatte Oberfläche auf, die die Ausrichtung der Fasern unterstützt.

Ebenfalls vorteilhaft ist es, die Bohrungen dann zu formen, wenn die Rohmasse bereits leicht vorverdichtet ist, so dass ein gewisser Widerstand die Ausrichtung der Faserbündel begünstigt.

Die bohrungsformenden Stifte können in dem Formwerkzeug beweglich angeordnet sein. Dies bedeutet, sie können beispielsweise auf Schiebern montiert sein und somit bei Bedarf in das Werkzeug hinein und heraus gefahren werden.

Die Bohrungen können mit einem geringen Übermaß im Vergleich zur endgültigen Abmessung im C/SiC-Verbundkörper vorgeformt werden. Hiermit wird erzielt, dass möglichst keine Fasern bei einer nachträglichen Feinbearbeitung beschädigt werden.

Die Bohrungen lassen sich vorteilhaft einbringen, wenn die bohrungsbildenden Stifte eine Drehbewegung beschreiben.

Ein weiterer Bestandteil der Erfindung ist eine C/SiC-Verbundkörper nach Anspruch 7, der durch ein Verfahren nach Anspruch 1 hergestellt wird. Der Körper zeichnet sich insbesondere dadurch aus, dass Verstärkungsfasern weitgehend radial um die Bohrung, angeordnet sind. Verbundkörper mit Bohrungen, hergestellt nach Anspruch 1, zeichnen sich durch eine besonders hohe Belastbarkeit im Bereich der Bohrung aus. Dieser Effekt wird noch verstärkt, wenn die Faserdichte um die Bohrung höher ist als im übrigen Verbundkörper.

Besonders geeignet sind derartige Verbundkörper als Bremsscheiben.

Vorteilhafte Ausgestaltungsformen der Erfindung werden anhand der folgenden Figuren und Beispiele näher erläutert.

Dabei zeigen:
- Fig. 1a: eine schematische Darstellung der Rohmasse mit Faserbündeln,
- Fig. 1b: eine Rohmasse analog Fig. la mit Stift und Bohrung,
- Fig. 2: ein Formgebungswerkzeug mit Rohmasse und starren Stiften und
- Fig.3: ein Formgebungswerkzeug mit Rohmasse und beweglichen Stiften.

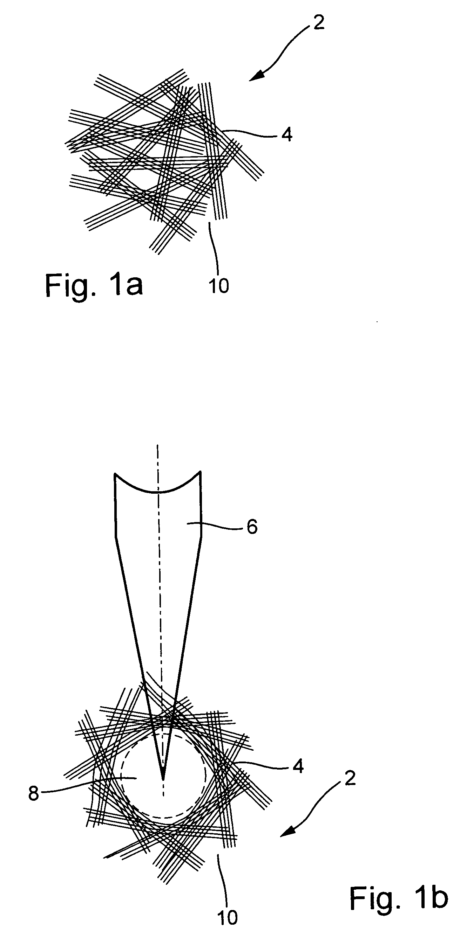

Eine aufbereitete Rohmasse 2 in Fig. 1 umfasst Kurzfaserbündel 4 aus Kohlenstoff, die mit einem Phenolharz imprägniert sind. Die Faserbündel 4 sind mit weiteren Bindemitteln unter anderem Phenolharz sowie mit Füllstoffen wie Rußpartikeln gemischt. Bindemittel und Füllstoffe bilden die Matrix 10 um die Faserbündel 4. Gegebenenfalls enthält die Rohmasse 2 noch weitere Zusatz- und Hilfsstoffe.

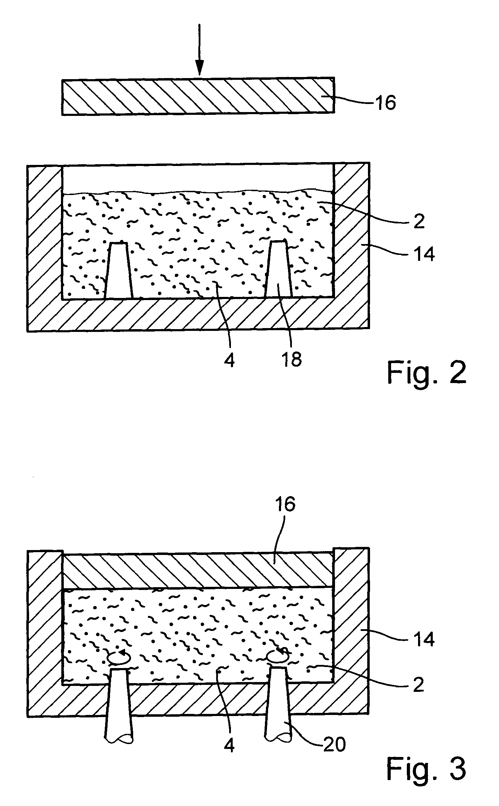

Die Rohmasse wird in ein Presswerkzeug (Figuren 2 und 3), das in diesem Beispiel als Formwerkzeug fungiert, dosiert. Durch einen Stift 6 (Fig. 1b) wird eine Bohrung 8 in der Rohmasse 2 eingebracht. Die Faserbündel 4 richten sich dabei radial um die Bohrung 8 aus. Der Stift 6 in Fig. 1b ist zu seinem Ende hin spitz ausgestaltet. Eine Ausgestaltung als Kegelstumpf (konisch) ist ebenfalls zweckmäßig.

### Beispiel 1

Eine bereits beschriebene Rohmasse 2 wird zur Herstellung eines Bremsscheibenrohlings in ein Presswerkzeug 14 gefüllt. Das Presswerkzeug 14 weist Stifte 18 zur Ausbildung von Bohrungen 8 in der Rohmasse 2 auf. In diesem Stadium des Verfahrens ist der Begriff Bohrung auch mit dem Begriff Aussparung gleichzusetzen.

Die Stifte 18 sind im Presswerkzeug 14 starr befestigt. Die Rohmasse 2 wird um die Stifte 18 herum in das Presswerkzeug 14 gefüllt. Anschließend fährt der Stempel 16 herunter und die Rohmasse 2 wird zu einem CFK-Körper gepresst.

Der CFK-Körper wird gegebenenfalls noch im Presswerkzeug 14 durch eine Wärmebehandlung ausgehärtet (Vernetzung der Bindemittel) und entformt. Die Bohrungen 8 bleiben im CFK-Körper bestehen.

In einem nächsten Arbeitsschritt wird der CFK-Körper unter Luftausschluss karbonisiert. Die Kunststoffe im CFK-Körper werden hierbei zu Kohlenstoff reduziert. Das Ergebnis ist ein C/C-Körper, der wiederum als Preform für die folgende Siliziuminfiltration dient.

Nach der Si-Infiltration sind die Bohrungsränder mit Silizium bedeckt. Die Bohrungen 8 werden auf die gewünschte Größe bearbeitet, wobei jedoch keine Fasern 4 beschädigt werden, da die vorgeformten Bohrungen etwas größer ausgestaltet sind als endgültige Bohrungen im C/SiC-Verbundkörper. Das hat gleichzeitig den Vorteil, dass für eine Präzisionsbohrung die genaue Lage der Bohrung erst im fertigen Bauteil bestimmt wird.

Die Ausrichtung der Fasern bleibt während des gesamten Herstellungsprozesses nach der Formgebung des CFK-Körpers erhalten. Da die Fasern 4 im Bereich der Bohrung nahezu keine Schädigung aufweisen, stellt dies eine erhöhte Verstärkung am Rand der Bohrung 8 dar. Der Si/SiC-Verbundkörper ist in Form einer Bremsscheibe ausgestaltet und kann nun mit einem Anbauteil, beispielsweise mit einem metallischen Bremsscheibentopf, verschraubt oder anderweitig verbunden werden.

### Beispiel 2

Analog Beispiel 1, die Rohmasse 2 wird in das Presswerkzeug 14 gefüllt und durch den Stempel 16 leicht vorverdichtet. Die Stifte 20 sind beweglich auf einem hier nicht näher dargestellten Schieber angeordnet und fahren optional unter Ausübung einer Drehbewegung in die bereits vorverdichtete Rohmasse 2.

Diese Variante bedeutet zwar einen höheren technischen Aufwand als in Beispiel 1 beschrieben, durch den Widerstand, den die vorverdichtete Rohmasse 2 den Stiften 20 entgegenbringt, gestalteten sich die Faserbündel 4 jedoch noch vorteilhafter um die Stifte 20, insbesondere die Faserdichte um die Bohrung herum wird erhöht.

Die Länge der Stifte 18, 20 ist in Beispiel 1 und Beispiel 2 jeweils so bemessen, dass der Stempel 16 im fertig gepressten Zustand diese gerade nicht berührt.

In den vorhergegangenen Beispielen ist jeweils eine Bohrung 8 vertikal zu einer Scheibe beschrieben worden. Grundsätzlich ist das erfindungsgemäße Verfahren auch auf horizontale Bohrungen, beispielsweise Kühlungsbohrungen bei Bremsscheiben, anwendbar.

Die Bohrungen können auch zu einem Bremsscheiben-Innenrand hin geöffnet sein und die Form einer Nut aufweisen.

Als Formgebungsverfahren für den CFK-Körper wird hier stellvertretend für weitere mögliche Verfahren das uniaxiale Pressen beschrieben. Das Verfahren zeichnet sich durch eine hohe Wirtschaftlichkeit und besonders durch eine hohe Maßtoleranz aus. Andere Verfahren zur Formgebung, beispielsweise Schlickergießen in eine Gießform, isostatisches Pressen oder Laminieren sind ebenfalls auf das erfindungsgemäße Verfahren anwendbar.

Die Erfindung ist auch auf langfaserverstärkte Rohmasse, beispielsweise mit dreidimensionalen Gewebe, anwendbar.

## Patentansprüche

1. Verfahren zum Einbringen von Bohrungen (8) in einen C/SiC-Verbundkörper, umfassend folgende Verfahrensschritte:
• Befüllen eines Formwerkzeuges (14) mit einer Kohlenstofffasern (4) enthaltenden Rohmasse (2),
• Formgebung der Rohmasse (2) zu einem CFK-Körper,
• karbonisieren des CFK-Körpers zu einer C/C-Preform,
• Reaktionsinfiltration der C/C-Preform zu dem C/SiC-Verbundkörper,
**dadurch gekennzeichnet,**
• **dass** ein Vorformen der Bohrungen (8) während und/oder nach dem Befüllen des Formwerkzeuges (14) mit der Rohmasse (2) erfolgt.

2. Verfahren nach Anspruch 1,
**dadurch gekennzeichnet,**
**dass** das Vorformen der Bohrungen (8) durch bohrungsformende Stifte (6, 18, 20) erfolgt.

3. Verfahren nach Anspruch 1 oder 2,
**dadurch gekennzeichnet,**
**dass** die Rohmasse (2) im Formwerkzeug (14) vor dem Vorformen der Bohrungen (8) vorverdichtet wird.

4. Verfahren nach einem der Ansprüche 1 bis 3,
**dadurch gekennzeichnet,**
**dass** die bohrungsformenden Stifte (20) im Formwerkzeug (14) beweglich angeordnet sind.

5. Verfahren nach einem der Ansprüche 1 bis 4,
**dadurch gekennzeichnet,**
**dass** die vorgeformten Bohrungen (8) einen größeren Durchmesser aufweisen als Bohrungen im C/SiC-Verbundkörper.

6. Verfahren nach einem der Ansprüche 1 bis 5,
**dadurch gekennzeichnet,**
**dass** durch die Stifte (20) Drehbewegungen ausgeführt werden.

7. C/SiC-Verbundkörper, hergestellt durch ein Verfahren nach einem der Ansprüche 1 bis 6,
**dadurch gekennzeichnet,**
**dass** die Fasern (4) weitgehend radial um die Bohrung (8) angeordnet sind.

8. C/SiC-Verbundkörper nach Anspruch 7,
**dadurch gekennzeichnet,**
**dass** die Faserdichte im Bereich der Bohrungen (8) höher ist als im übrigen Körper.

9. C/SiC-Verbundkörper nach Anspruch 7,
**dadurch gekennzeichnet,**
**dass** der Verbundkörper eine Bremsscheibe ist.
